(19) Europäisches Patentamt / European Patent Office / Office européen des brevets

(11) EP 1 880 615 A2

(12) EUROPÄISCHE PATENTANMELDUNG

(43) Veröffentlichungstag:
23.01.2008 Patentblatt 2008/04

(51) Int Cl.:
A23G 1/00 (2006.01)     A23G 1/46 (2006.01)

(21) Anmeldenummer: 07013983.7

(22) Anmeldetag: 17.07.2007

(84) Benannte Vertragsstaaten:
AT BE BG CH CY CZ DE DK EE ES FI FR GB GR HU IE IS IT LI LT LU LV MC MT NL PL PT RO SE SI SK TR
Benannte Erstreckungsstaaten:
AL BA HR MK YU

(30) Priorität: 17.07.2006 DE 102006033012

(71) Anmelder:
• Hochschule Neubrandenburg
17033 Neubrandenburg (DE)
Benannte Vertragsstaaten:
DE
• LIPP Mischtechnik GmbH
68309 Mannheim (DE)

(72) Erfinder:
• Bolenz, Siegfried, Prof.Dr.
17217 Kukow (DE)
• Lipp, Eberhard, Dipl.-Ing.
67122 Altrip (DE)
• Kuschke, Elisa, Dipl.-Ing.
01309 Dresden (DE)

(74) Vertreter: Petersen, Frank et al
Lemcke, Brommer & Partner
Patentanwälte
Bismarckstrasse 16
76133 Karlsruhe (DE)

(54) **Verfahren zur Schokoladenherstellung mit Aufbereitung von Milchpulver**

(57) Die Erfindung betrifft ein Verfahren zu Herstellung von Schokoladenfeingut. Hierbei wird vorgeschlagen, Milchpulver auf eine Restfeuchte von < 1 % zu trocknen und anschließend mit einem in der Rezeptur für die Schokolade vorgesehenen Fett zu dispergieren, um die hygroskopischen Eigenschaften des nachgetrockneten Milchpulvers zu beseitigen. Für die Trocknung kann dem Milchpulver auch Kristallzucker beigemischt werden.

Fig. 1

EP 1 880 615 A2

## Beschreibung

Die Erfindung betrifft ein Verfahren zur Herstellung von Schokoladenfeingut mit Aufbereitung von verwendetem Milchpulver.

Soweit im Rahmen dieser Anmeldung von Milchpulver geredet wird, wird hierunter vorzugsweise Magermilchpulver verstanden oder aber auch Vollmilchpulver (mit bis zu 26 % Fett) oder aber auch Spezialprodukte wie z.B. laktosearme Milchprodukte.

Derartiges Milchpulver wird bekannterweise für die Herstellung von Schokoladenfeingut verwandt. Für Milchschokolade und weiße Schokolade werden im derzeit am weitesten verbreiteten Verfahren zunächst die Rohstoffe zu einer homogenen pastösen Masse vermischt mit einem Fettgehalt zwischen 23 - 28 %. Die größten Rohstoffanteile sind dabei Zucker, Kakaobutter, Kakaomasse sowie bei Milchschokolade das oben besprochene Milchpulver. Rezepturbedingt können weitere Bestandteile zugegeben werden.

Der Fettgehalt dieser pastösen Masse wird eingestellt, indem ihr lediglich ein Teil der für das gemäß Rezeptur für das Endprodukt benötigten Kakaobutter beigegeben wird.

Grundsätzlich werden dann in einem zweistufigen Verfahren mit einem Vor- und Feinwalzen die Partikel der pastösen Masse mittels sogenannter Glattwalzenmühlen zerkleinert, so dass diese Partikel in der fertigen Schokolade von der Zunge nicht mehr wahrgenommen werden können.

Aufgrund der sich bei der Zerkleinerung ergebenden Oberflächenvergrößerung sind danach allerdings nicht mehr alle Feststoffpartikel in der Masse vollständig mit Fett umschlossen. Die Masse ist daher pulverig und nur wenig klebrig. Dieses Zwischenprodukt wird dann zur Verflüssigung und sensorischen Verfeinerung conchiert, d.h. in einer speziellen Chargenknetmaschine - der sogenannten Conche - zunächst unter ständiger Auflockerung belüftet und erwärmt, später unter hohem Energieeintrag geschert und zuletzt verflüssigt mit Zugabe der restlichen gemäß Rezeptur benötigten Kakaobutter und eventuell einem Emulgator.

Der Conchiervorgang ist sehr zeit- und kostenintensiv und dauert trotz Einsatz effektiver Scherwerkzeuge und Anwendung erhöhter Leistung heute immer noch zwischen 5 und 12 Stunden, in Fällen von als besonders hochwertig vermarkteten Schokoladen auch länger.

Das Conchieren dient neben der Aromaentwicklung hauptsächlich der Entfernung von Wasser aus der Masse. Der Wassergehalt beeinflusst die Fließeigenschaften von flüssiger Schokolade. Um die geforderte niedrige Viskosität zu erhalten, muss der Wassergehalt der Masse in der sogenannten Trockenconchierphase von ca. 1,0 - 1,5 % auf weniger als 0,6 % reduziert werden.

Dies ist besonders schwierig, da sowohl hygroskopische Inhaltsstoffe das Wasser binden als auch das ebenfalls vorhandene Fett den Stofftransport und damit auch die Abgabe von Wasser behindert.

Letztlich muss man zugeben, dass in den üblichen verwandten Conchen die Energie- und Stoffübergänge stark behindert sind aufgrund der ungünstigen Oberflächen-Volumenverhältnisse in der Conche. Hierdurch begründen sich im wesentlichen die derzeit üblichen langen Conchierzeiten.

Es ist dabei bekannt, dass das Wasser, das beim Conchieren aus der Masse entfernt werden soll, hauptsächlich durch die Rohstoffe wie Milchpulver und Kakaomasse eingebracht wird. Unter diesem Aspekt wird teilweise bereits mittels Dünnschichtverdampfung vorgetrocknete Kakaomasse verwandt, deren Wasser- und auch Säuregehalt bereits reduziert ist. Diese Schritte der Veredlung, die früher erst während des Conchierens stattfanden, werden heute also dem Herstellungsprozess von Schokolade bereits größtenteils vorgelagert.

Letztlich wird somit Wasser hauptsächlich noch durch das Milchpulver in die Schokoladenmasse eingebracht.

Hierzu ist zu berücksichtigen, dass Milchpulver unter günstigen Lagerbedingungen (20 °C, 50 % relative Luftfeuchtigkeit) normalerweise eine Gleichgewichtsfeuchte von etwa 4 % hat: Bei der Herstellung von Milchpulver wird Milch durch Verdampfen und nachfolgendes Trocknen das Wasser entzogen. Es gibt hierbei verschiedene großtechnisch angewandte Verfahren (Walzentrocknung, Sprühtrocknung, Gefriertrocknung), die eine Trocknung auf einen Endwassergehalt von ca. 3 - 5 % ermöglichen. Dieser Restwassergehalt wird allgemein akzeptiert, weil er für die üblichen Anwendungen nicht stört.

Für die Schokoladenherstellung wäre zwar der Einsatz von Milchpulver mit einer Feuchte von geringer als 1 % ideal. Eine Trocknung unterhalb der genannten Gleichgewichtsfeuchte ist aber einerseits aufgrund der starken Hygroskopizität, d.h. der Neigung, Wasser aus der Umgebungsluft zu absorbieren, sehr schwierig.

Andererseits ist auch bei einer Fortführung der bei der Herstellung von Milchpulver angewandten Verfahren zur weiteren Trockung an dem Milchpulver ein sogenannter Glasübergang (engl.: "glass transition") festzustellen: Bei Erreichen einer bestimmten Temperatur ändert sich die vorher glasartig erstarrte Struktur der Laktose, die Matrix des Milchpulverpartikels wird gummiartig und klebrig, zusätzlich kann eingeschlossenes Fett austreten. Man erhält dann eine klebrig-pastöse Masse.

Dieses Produkt klebt dann an den Trocknereinrichtungen, lässt sich hiervon nur noch schwer lösen und beeinträchtigt somit den Wärmeübergang erheblich.

Da die Milchpulverpartikel nunmehr eine klebrig-pastöse Struktur aufweisen und bei Vollmilchpulver zusätzlich mit Fett benetzt sind, wird eine weitere Reduktion des Wassergehaltes verhindert. Weiterhin verändert das Milchpulver auch seine Farbe und seinen Geschmack.

Aus den genannten Gründen ist der Glasübergang daher meistens unerwünscht.

In der Literatur wurde in diesem Zusammenhang der Schokoladenherstellung lediglich vorgeschlagen, Vollmilchpulver mit Hilfe von Zeolith, also einem chemischen Trocknungshilfsmittel auf eine Restfeuchtigkeit von weniger als 1 % zu trocknen. Eine derartige Trocknung mit Zeolith ist aber zum einen sehr aufwändig. Zum anderen müssen nach der Trocknung das Milchpulver und das Zeolith wieder getrennt werden, wodurch Produktverluste auftreten können. Auch ist die Frage einer Wiederverwendung des Zeoliths nach dessen gegebenenfalls erfolgten Trocknung und Reinigung ungeklärt. Es ist auf jeden Fall davon auszugehen, dass diese bisher lediglich im Labormaßstab überprüfte Möglichkeit zur Milchpulvertrocknung hohe Kosten verursachen würde. Auch ist davon auszugehen, dass eine entsprechende großtechnische Anlage sehr aufwändig wäre und damit hohe Investitionskosten erfordern würde.

Letztlich liegt somit der Erfindung die Aufgabe zugrunde, ein Verfahren zur Herstellung von Schokoladenfeingut anzugeben mit der Aufbereitung von Milchpulver, wobei dem Milchpulver Feuchtigkeit entzogen wird. Ein solches Verfahren soll betriebssicher und großtechnisch einsetzbar sein.

Diese Aufgabe wird gemäß einem ersten erfindungsgemäßen Verfahren dadurch gelöst, dass Milchpulver mit einer üblichen Gleichgewichtsfeuchte von ca. 4 % einer weiteren thermischen Trocknung unterzogen wird mit einer Temperatur von weniger als 105 °C, insbesondere von weniger als 100 °C.

Der Erfindung liegt dabei die Erkenntnis zugrunde, dass der unerwünschte Glasübergang im Wesentlichen auf die Energiezufuhr durch hohe Temperaturen zurückzuführen ist, die erfindungsgemäß verhindert werden.

Besonders gute Trockenergebnisse haben sich ergeben bei einer Schichtdicke des zu trocknenden Milchpulvers während des Trocknungsprozesses zwischen 0,1 und 10 cm und einer Trocknungsdauer von 10 min bis 100 min.

Besonders bevorzugt wird gearbeitet bei Schichtdicken zwischen etwa 1 und 3 cm. Bevorzugterweise sollen die Temperaturen außerdem zwischen 90 °C und 100 °C liegen. Besonders gute Trocknungsergebnisse haben sich ergeben bei Trocknungsdauern von etwa 40 - 60 min.

Vorzugsweise soll bei der diskutierten Trocknung auch noch Luft zugeführt werden bei einer Strömungsgeschwindigkeit zwischen 0,1 - 1 m/s, insbesondere von ca. 0,4 m/s.

Alle vorgenannten Parameter können in den angegebenen Grenzen frei variiert und miteinander kombiniert werden. Grundsätzlich kann man somit auch den gestellten Anforderungen genügende Produkte erzielen, wenn beispielsweise die Schichtdicke und die Temperaturen in den zuerst genannten Bereichen liegen und nur die Trocknungsdauer in dem bevorzugten Bereich liegt, etc.

Um die Zufuhr insbesondere auch von mechanischer Energie zu begrenzen wird entweder mit einer ruhenden Trocknung, z.B. einer Trocknung auf Hordenblechen gearbeitet oder einer Trocknung, bei der nur wenig mechanische Energie auf das Trocknungsgut wirkt wie beispielsweise bei Band-, Tunnel-, Streuteller- oder Fliessbetttrocknern.

Durch die Trocknung des Milchpulvers in diesen Trocknern wird eine Eintragung von Scherkräften vermieden. Auf diese Weise kann der oben angesprochene ungewünschte Glasübergang besonders gut verhindert werden.

Der Vorteil des beschriebenen Verfahrens liegt darin, dass mit einem derart nachgetrockneten Trockenmilchprodukt der Wassergehalt einer mit diesem hergestellten Schokoladenmischung unter 0,6 % abgesenkt werden kann und somit bereits dem Wassergehalt in der fertigen Schokoladenmasse entspricht.

Hierdurch erübrigt sich die Notwendigkeit, erst während des Conchiervorganges die zeitaufwändige Trocknung durchzuführen. Hierdurch kann der Conchiervorgang stark beschleunigt und damit verkürzt werden.

Das hier offenbarte Verfahren eignet sich somit bei der Herstellung sowohl von Milchschokolade, als auch von weißer Schokolade oder anderen wasserfreien, milchpulverhaltigen Fettsuspensionen, wie z.B. Füllungen und Compound-Schokoladen.

Eine erfindungsgemäße Alternative zu dem bisher beschriebenen ersten Verfahren, mit der die Trocknung von Milchpulver erreicht werden soll, besteht darin, dass Milchpulver in einem Mengenverhältnis zwischen 10:1 und 1:5 trotzdem mit Kristallzucker zu vermengen und zu trocknen bei Temperaturen zwischen 60 °C und 150 °C für eine Dauer von 10 - 100 min.

Besonders bevorzugt ist dabei ein Mengenverhältnis anzustreben zwischen 2:1 und 1:2 sowie Temperaturen zwischen 90 °C und 110 °C, wobei eine bevorzugte Dauer etwa 40 - 60 min beträgt. Auch hier sind die genannten Parameter frei miteinander zu kombinieren.

Ein Milchpulver/Kristallzucker-Gemisch gibt noch die Möglichkeit, spezifische Geschmacksnoten in der fertigen Schokolade zu erzielen. Für diese sind Reaktionsprodukte verantwortlich, die durch so genannte Maillard-Reaktionen entstehen, bei denen Zucker mit Aminosäuren reagiert:

Für derartige Maillard-Reaktionen ist wie aus der EP-A-1 245 158 bekannt das Vorhandensein von Wasser bzw. Feuchtigkeit vorteilhaft, da sich diese beschleunigend auf die genannte Reaktion auswirkt. Unter diesem Aspekt wird vorgeschlagen, zur Geschmacksentwicklung dem eigentlichen Trocknungsprozess eine gezielte Temperierung des Milchpulver/Kristallzucker-Gemisches voranzustellen. Hierbei werden in einem Misch- oder Schaufeltrockner das Milchpulver und der Zucker ohne einen Trocknungsvorgang auf Temperaturen zwischen 50 °C und 110 °C gebracht und auf dieser Temperatur für eine Zeit von 20 - 200 min gehalten. In dieser Zeit ist dann die gewünschte Geschmacksentwicklung abgeschlossen und das eigentliche Trocknen kann durchgeführt werden. Es hat sich dabei herausgestellt, dass für die Geschmacksentwicklung ein Zusatz von Wasser, wie er in der oben genannten Druckschrift vorgeschlagen wird, überflüssig ist. Auf diesen wir somit bei dem hier beschriebenen Verfahren ausdrücklich verzichtet, insbesondere um nicht anschließend dieses zugesetzte Wasser während der Trocknung aufwändig wieder entfernen zu müssen.

Außerdem kann das zugesetzte Wasser den verwandten Kristallzucker zumindest teilweise auflösen, so dass dessen - wie unten erläutert - gewünschte große Oberfläche verloren geht.

Die trockene Mischung des Milchpulvers mit dem Zucker kann in einem separaten Mischvorgang erfolgen. Insbesondere, wenn keine der erwähnten Reaktionen zur Geschmacksbildung vorgesehen sind, wird bevorzugterweise das Mischen aber gleichzeitig mit dem Trocknen durchgeführt. Hierdurch sind zeitliche und apparative Einsparungen möglich.

Ein besonders wirksames Mischen und/oder Trocknen hat sich bei Versuchen der Erfinder ergeben bei einer Umwälzung der Produkte mit einer Drehzahl eines zu verwendenden Schaufeltrockners oder -mischers, der einer Froudzahl von 0,5 - 3,0 entspricht, wobei die Froudzahl Fr in bekannter Weise von den Abmessungen und der Rotationsgeschwindigkeit des Mischers abhängt gemäß folgender Formel:

$$Fr = v^2 / (R \cdot g)$$

mit

    $v$ = Umfangsgeschwindigkeit [m/s]
    $R$ = Radius [m]
    $g$ = Erdbeschleunigung [m/s$^2$]

Außerdem sei erwähnt, dass die Trocknung sowohl unter Vakuum erfolgen kann als auch unter Normaldruck, wobei dann ein Luftaustausch vorgeschlagen wird mit einer Temperatur der zugeführten Luft zwischen 10 °C und 140 °C, vorzugsweise zwischen 90 °C und 110 °C.

Die Verwendung von Kristallzucker bewirkt zum einen, dass das Milchpulver während der Trocknung auch unter Einwirkung von mechanischer Energie und höheren Temperaturen rieselfähig bleibt, was bei reinem Milchpulver wie weiter oben beschrieben normalerweise zu einem Glasübergang führen würde. Mit Kristallzucker sind somit auch bei einer thermischen Trocknung höhere Temperaturen möglich. Dies ist darauf zurückzuführen, dass der Zucker das Verkleben und Verfestigen des Pulvers durch die von ihm bereitgestellte Oberfläche zur Aufnahme des austretenden Milchfettes verhindert. Gegenüber der eingangs diskutierten theoretischen Möglichkeit, als Trocknungshilfsmittel Zeolith einzusetzen, hat Zucker den erheblichen Vorteil, dass er in der Mischung verbleiben kann. Er muss also nicht vor einer Weiterverarbeitung des sich ergebenden Produktes abgetrennt werden, sondern kann als Bestandteil in der fertigen Schokolade aufgehen.

Die Erfinder haben bei ihren Versuchen mit den oben genannten Trocknungs- und Mischverfahren teilweise erhebliche Staubentwicklungen gehabt.

Abgesehen davon, dass derartige Stäube immer die Gefahr von Staubexplosionen beinhalten, ist aus emissionstechnischen Gründen dann ein apparativ aufwändiges und damit kostenträchtiges Filtersystem vorzusehen. Die Erfinder haben in diesem Zusammenhang festgestellt, dass ein Einmischen einer geringen Menge Fett in das Milchpulver bzw. Milchpulver/Kristallzucker-Gemisch die Staubentwicklung unterbindet ohne den Trocknungsprozess zu beeinflussen.

Bei einer bevorzugten Ausführungsform der vorgeschlagenen Verfahren wird somit dem zu trocknenden Milchpulver oder Milchpulver/Kristallzucker-Gemisch noch etwa 0,2 - 3 Gew-% Fett zugegeben, vorzugsweise 0,3 - 0,7 %.

Bei dem Fett handelt es sich insbesondere um einen rezepturgemäßen Bestandteil wie Kakaobutter, wasserfreies Butterreinfett oder Pflanzenfett.

Wie bereits oben diskutiert, hat das mit den beiden zuvor genannten Verfahren getrocknete Milchpulverprodukt starke hygroskopische Eigenschaften und sollte daher nach Möglichkeit unverzüglich weiterverarbeitet werden in der Schokoladenherstellung. Hierin wird ein Nachteil gesehen unter dem Aspekt, dass das nachgetrocknete Milchpulver nicht diskontinuierlich oder auf Vorrat hergestellt werden kann, um es dann bei Bedarf in einer Schokoladenproduktion weiterzuverarbeiten. Es stellt sich somit die weitere Aufgabe, das bisher erreichte Pulver, das nach der erfolgten Nachtrocknung dazu neigt, wieder Feuchtigkeit aus der Luft zu absorbieren, lagerfähig zu machen.

Hierzu wird erfindungsgemäß vorgeschlagen, das getrocknete Milchpulver in einem anschließenden weiteren Schritt in einem Fett zu dispergieren, das Teil der fertigen Schokoladenrezeptur ist.

Bei diesem Fett handelt es sich um Kakaobutter, um wasserfreies Butterrein- bzw. Milchfett oder auch Pflanzenfett.

Für diese erfindungsgemäß vorgeschlagene Dispersion wird vorzugsweise ein kontinuierlich arbeitender Hochschermischer eingesetzt, wie er beispielsweise in der DE 43 13 149 offenbart ist. Es können aber auch chargenweise arbeitende Mischer eingesetzt werden, wie sie beispielsweise bekannt sind aus der EP 0 879 562 oder der EP 1 352 683.

In einem die Vorbehandlung des Milchpulvers abschließenden Schritt kann die pastöse Masse aus Milchpulver/Fett bzw. Milchpulver/Zucker/Fett noch granuliert bzw. zu Pellets verarbeitet werden. Dies geschieht beispielsweise, indem eine entsprechende Dispersion, die bei Temperaturen zwischen 40 °C und 50 °C als pumpfähiges und damit leicht zu handhabendes Produkt vorliegt, in einer dünnen Schicht auf ein gekühltes Band oder eine gekühlte Walze aufgegeben wird, von denen sie nach der erfolgenden Erstarrung abgeschabt und gegebenenfalls noch gebrochen wird. Das sich so ergebende Granulat bzw. die sich ergebenden Pellets sind bei Umgebungstemperatur einfach zu transportieren und können auch gut gelagert und bei dem nachfolgenden Schokoladeherstellungsverfahren leicht dosiert werden.

Weitere Vorteile und Merkmale der Erfindung ergeben sich aus der nachfolgenden Beschreibung von Ausführungsbeispielen der erfindungsgemäßen Verfahren. Dabei zeigt:

Figur 1    ein Flussdiagramm für ein Verfahren zur Herstellung und Verarbeitung von getrocknetem Milchpulver;

Figur 2    ein Flussdiagramm für ein Verfahren zur Herstellung und Verarbeitung von getrocknetem Milchpulver unter Beimischung von Kristallzucker.

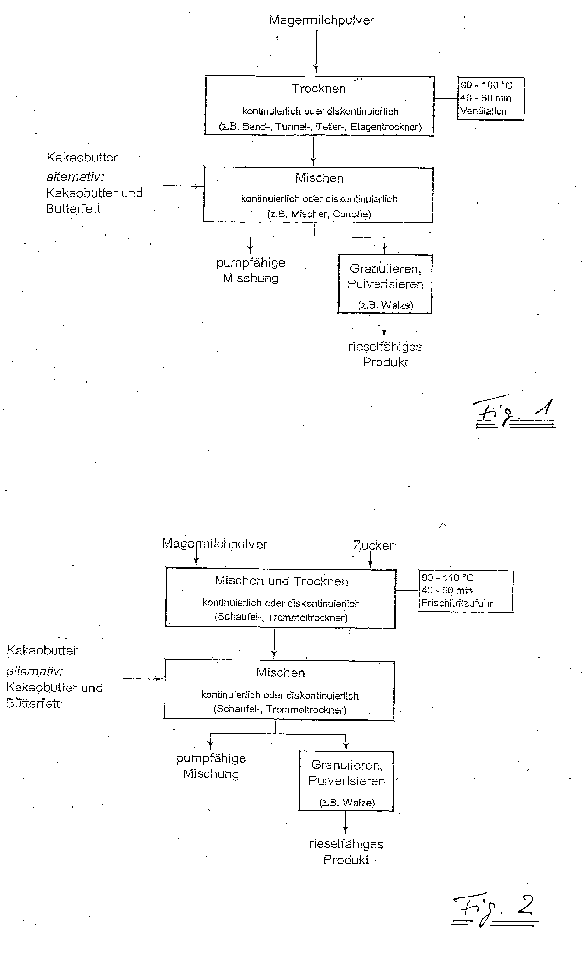

Figur 1 zeigt ein Flussdiagramm für ein Verfahren zur Herstellung und Verarbeitung von getrocknetem Milchpulver. Bei diesem Verfahren wird eine kontinuierliche Trocknung von reinem Milchpulver bewirkt mittels eines Bandtrockners oder eines Tunneltrockners, eines Streutellertrockners, eines Etagentrockners oder eines Fließbetttrockners.

Zur Ermittlung der Verfahrensparameter bei dieser Trocknung wurde von den Erfindern eine ruhende Trocknung als Konvektivtrocknung auf Hordenblechen in einem Trockenschrank durchgeführt. Es stellten sich die besten Trocknungsergebnisse ein bei Temperaturen von 90 °C - 100 °C, einer Trockendauer von 40 - 60 min und einer gewählten Schichtdicke von 0,5 - 2 cm. Außerdem wurde Trocknungsluft zugeführt mit einer Geschwindigkeit von 0,4 m/s zur Abfuhr von Schwaden und Brüden. Teilweise wurde dem Milchpulver vor der Trocknung noch Fett zugesetzt in einer Menge von 0,2 - 0,7 %. Hierdurch wurde eine Staubbildung bei der Trocknung unterbunden, wobei festzustellen war, dass der Fettzusatz auf die Trocknung keinen Einfluss nahm.

In der Figur 2 wird ein Flussdiagramm für ein Verfahren zur Herstellung und Verarbeitung von getrocknetem Milchpulver dargestellt, bei dem Kristallzucker beigemischt wird.

Das Mengenverhältnis von Milchpulver zu Kristallzucker, das zwischen 10:1 und 1:5 liegen soll, lag bei den Versuchen der Erfinder zwischen 2:1 und 1:2. Ein höherer Zuckeranteil ermöglicht zwar eine geringfügig schnellere Trocknung. Je höher der Zuckeranteil ist, desto höher muss aber auch der Anteil an Fett sein, der nach der erfolgten Trocknung zuzugeben ist, um eine Wasseraufnahme aus der Luft zu verhindern. Außerdem muss bei höherem Zuckeranteil auch das Volumen des benötigten Trockners erhöht werden.

Ein hoher Zuckeranteil speichert darüber hinaus auch mehr Wärme, was zwar die Trocknung als solches begünstigt, für die Weiterverarbeitung aber meist unerwünscht ist.

Vor der Trocknung wurde teilweise das Milchpulver/Kristallzucker-Gemisch ohne Trocknung auf Temperaturen von 50 °C - 100 °C gebracht und für einen Zeitraum von 20 - 200 min auf dieser Temperatur gehalten. Hierdurch wurden Reaktionen des Zuckers mit Aminosäuren aus dem Milchpulver ermöglicht, die zu spezifischen Geschmacksnoten bei dem fertigen Schokoladenprodukt führten. Da diese sogenannte Maillard-Reaktionen in der Anwesenheit von Feuchtigkeit besser abläuft, wurde der eigentliche Trocknungsprozess erst anschließend vorgenommen.

Die eigentliche Trocknung des Milchpulver/Kristallzucker-Gemisches erfolgte dann in einem Kontakttrockner. Es kann sowohl mit als auch ohne Luftdurchleitung gearbeitet werden, z.B. in einem Schaufeltrockner oder einem Trommeltrockner.

Auch das Trocknen unter Vakuum oder in kombinierten Kontakt-Konvektivtrocknern ist möglich.

Das Gemisch aus Kristallzucker und Milchpulver wurde während der Trocknung 40 - 60 min ständig umgewälzt bei ca. 10 - 30 U/min, was bei dem verwandten Trockner einer Froudzahl entspricht von etwa 0,5 - 3,0.

Um bei der Umwälzung des Gemisches entstehende Stäube zu binden, wurde auch dem Gemisch teilweise etwa 0,3 - 0,7 Gew,-% Fett (Kakaobutter oder Milchreinfett) zugesetzt, wobei sich auch hier herausstellte, dass dies auf die eigentliche Trocknung keinen Einfluss hatte.

Die Kontaktflächen des verwandten Trockners wurden mittels Wasser oder Dampf erwärmt auf eine bevorzugte Temperatur von 100 °C - 110 °C bei einer insgesamt möglichen Temperaturspreizung im Bereich zwischen 60 °C und 150 °C.

Die Erfinder haben festgestellt, dass falls die Trocknung nicht unter Vakuum erfolgt, im Trockner ein stetiger Luftaustausch erforderlich ist, um die Brüden ab- und Frischluft zuzuführen. Die dabei zugeführte Luft, die im Temperaturbereich zwischen 10 °C und 140 °C liegen sollte, hatte idealerweise eine Temperatur von 90 °C - 110 °C, um den Trocknungsvorgang optimal zu unterstützen.

Es hat sich weiter herausgestellt, dass die Prozessparameter für die Trocknung von Vollmilchpulver und Magermilchpulver sich von einander unterscheiden. Dies gilt sowohl für die Trocknung von Milchpulver allein als auch für die Trocknung von Milchpulver/Kristallzucker-Mischungen.

Die Verwendung eines Magermilchpulvers wird bevorzugt, da es einen niedrigeren Fettgehalt hat und somit der gewünschte Wasserentzug schneller zu erreichen ist als bei der Trocknung von Vollmilchpulver, bei der das in diesem vorhandene Fett den gewünschten Austritt von Wasser erschwert.

Das mit den beschriebenen Verfahren nachgetrocknete Milchpulver ist unterhalb der Gleichgewichtsfeuchte und deshalb entweder sofort zu verbrauchen oder in einem weiteren Verfahrensschritt in einen lagerfähigen Zustand zu versetzen. Hierzu wird es in einem kontinuierlichen oder diskontinuierlichen Verfahren mit einem hydrophoben Rezepturbestandteil vermengt. Dabei werden die stark hygroskopischen Oberflächen der Milchpulverpartikel benetzt und somit vor Wasseraufnahme aus der Luft geschützt.

Die entsprechende Benetzung kann sowohl durch Dispergieren, als auch durch Agglomerieren oder durch eine Mikroverkapselung erfolgen. Die Erfinder haben festgestellt, dass mit dieser Benetzung mit einem hydrophoben Rezepturbestandteil der niedrige Wassergehalt über einen längeren Zeitraum aufrechterhalten werden kann, womit die Lagerstabilität zu belegen ist.

In einem ersten Versuch wurde Magermilchpulver unter den oben genannten Parametern auf einen Wassergehalt von weniger als 1 % getrocknet. Danach wurde es sofort in einem gemäß Rezeptur vorgesehenen Fett (d.h. Kakaobutter oder wasserfreiem Butterreinfett) dispergiert. Hierzu wurde bei einer vorherigen kontinuierlichen Trocknung vorzugsweise ein kontinuierlich arbeitender Hochschermischer eingesetzt, wie er beispielsweise aus dem Patent Nr. DE 43 13 149 bekannt ist.

Alternativ wurden mehrere, taktweise versetzt arbeitende Chargenmischer eingesetzt, die beispielsweise beschrieben wurden in der EP 0 879 562 oder EP 1 352 683.

Insbesondere wurden drei Teile Magermilchpulver mit einem Teil Butterreinfett gemischt, so dass das sich ergebende Produkt einem getrockneten Vollmilchpulver entsprach. Da allerdings festgestellt wurde, dass der Fettanteil (25 %) nicht ausreichte, um das Milchpulver vollständig zu benetzen, wurde zusätzlich Kakaobutter zugegeben, so dass der Gesamtfettgehalt der resultierenden Suspension mindestens 25 %, idealerweise aber 35 - 50 % betrug. Es ergab sich somit insgesamt ein Produkt mit ca. 50 - 75 % Magermilchpulver, 15 - 25 % Milchfett und 10 - 35 % Kakaobutter.

Der Vorteil des hier beschriebenen Produktes gegenüber getrocknetem konventionellem Vollmilchpulver mit etwa gleichem Fettgehalt liegt darin, dass das Butterreinfett frei, d.h. nicht an Partikelhohlräume gebunden vorliegt, Hierdurch werden die Fließeigenschaften vorteilhaft beeinflusst.

Durch den extrem niedrigen Wassergehalt und den hohen Freifettanteil der sich ergebenden Milchpulver-Fett-Suspension wurde beim anschließenden Mischen mit den restlichen Schokoladenbestandteilen eine erheblich niedrigere Viskosität erreicht als bei konventionellen Verfahren.

Um dies auszugleichen wurde festgestellt, dass zunächst weniger Fett und erst beim späteren Verflüssigen dann mehr Fett zugesetzt werden kann. Dies wirkte sich insgesamt positiv auf die Fließeigenschaften aus.

In der Milchpulver-Fett-Suspension kann das Verhältnis von Milchfett zu sonstiger Milchtrockenmasse so eingestellt werden, dass der eigentliche Milchanteil konventionellem Vollmilchpulver entspricht. Da hierbei kein weiteres Milchfett zugesetzt werden muss, sind keine zusätzlichen Lagerkapazitäten für Milchfett vorzusehen.

Eine Milchpulver-Fett-Suspension mit einem Fettanteil von mindestens 35 % liefert bei entsprechender Temperierung auf etwa 40 °C - 50 °C ein pumpfähiges und damit leicht zu handhabendes Produkt. Höhere Fettanteile sind zwar möglich, die Milchpulverpartikel in der Suspension neigen dann jedoch zur Sedimentation, so dass die Milchpulver-Fett-Suspension als pastöse Masse ständig gerührt werden muss.

Bei einer weiteren Ausführungsform des beschriebenen Verfahrens wurde statt Butterreinfett ausschließlich mit Kakaobutter gearbeitet. Da Milchfett bzw. Butterreinfett eine Oxydationsneigung hat, kann auf diese Weise eine längere Lagerstabilität erreicht werden.

Bei einem dritten Ausführungsbeispiel des erfindungsgemäßen Verfahrens wurden die Milchpulver-Fett-Suspensionen gemäß den oben beschriebenen Ausführungsbeispielen, die bei Umgebungstemperatur (< 25 °C) fest werden, direkt nach der Herstellung zu Pellets oder aber Granulaten verarbeitet. Dies wurde erreicht, indem die Suspensionen in einer dünnen Schicht auf ein gekühltes Band oder eine gekühlte Walze aufgegeben wurden, von denen sie nach der Erstarrung abgeschabt und gebrochen wurden. Es entstanden schüttfähige Granulate, die bei Umgebungstemperatur einfach transportiert, gelagert und dosiert werden können.

Bei einer weiteren Ausführungsform der Erfindung wurde Milchpulver und Kristallzucker in einem Verhältnis von 2:1 bis 1:2 gemischt. Die Mischung erfolgte diskontinuierlich in einem Schaufelmischer, wo die Mischung auch bei einer Froudzahl 0,5 - 3,0 und Temperaturen von 90 °C - 110 °C unter stetigem Luftaustausch getrocknet wurde. Die Mischung wurde anschließend, wie oben beschrieben, mit Fett benetzt, vorzugsweise in einem Verhältnis der Mischung zu Fett von 6,5:1 bis 2:1.

Die sich ergebende Mischung war lagerfähig und konnte auch zu Pellets weiterverarbeitet oder aber direkt für die Herstellung von Schokoladenvormischungen eingesetzt werden.

Bei einer Weiterführung des Verfahrens wurde die Milchpulver-Fett-Mischung bzw. die Milchpulver-Zucker-Fett-Mischung zu Schokoladenfeingut weiterverarbeitet. Dabei wurden das rezeptmäßig vorgesehene Milchpulver (ggf mit Zucker) und ein Teil des rezeptmäßig vorgesehenen Fettes (d.h. das gesamte Butterreinfett sowie ein geringerer Anteil Kakaobutter) gemischt und anschließend zerkleinert. Es zeigte sich, dass durch die Vortrocknung der Rohstoffe die sich ergebende Masse bei gleichem Fettgehalt eine niedrigere Viskosität hatte als bei Einsatz ungetrockneter Massen. Daraus ergibt sich, dass der Fettgehalt in der Masse beim Einstellen einer gleichen Viskosität niedriger sein kann. Letztlich ist hiermit (teure) Kakaobutter einzusparen.

Die zerkleinerte Masse wurde anschließend mit vorbehandelter Kakaomasse sowie den restlichen Fettanteilen verflüssigt. Es konnte dabei nachgewiesen werden, dass die Trockenphase (mit Be- und Entlüftung der entsprechenden Masse) des bisher bekannten konventionellen Conchierprozesses nicht mehr notwendig war. Vielmehr konnte das Verflüssigen in einer Batch-Conche mit verkürztem Verfahren (von lediglich 30 min) oder alternativ in einem kontinuierlichen Hochschermischer, wie z.B. dem gemäß DE 43 13 149 erfolgen. Der hier erfolgende hohe Schereintrag begünstigt dabei das schnelle Einstellen der erforderlichen Fließeigenschaften. Die Temperatur wird hierbei durch die auftretende Friktion eingestellt, d.h, durch den Füllgrad sowie die Drehzahlen der Rotoren. Es hat sich dabei als vorteilhaft erwiesen, das Schokoladenfeingut kurzzeitig chargenweise oder aber kontinuierlich in einem Mischer mit den restlichen Rezeptbestandteilen wie Kakaomasse und Kakaobutter etc. zu verpasten, bevor es in dem Hochschermischer verflüssigt wird. Es ist aber auch möglich, die genannten Komponenten direkt in der Scherzone des Hochschermischers zu dosieren.

Sollte für spezielle Schokoladen eine Geschmacksbeeinflussung mittels erhöhtem Energieeintrag gewünscht werden, kann dies z.B. durch Verweilen der temperierten Masse in einer Rohrleitungsschleife bewirkt werden.

## Patentansprüche

1. Verfahren zur Herstellung von Schokoladenfeingut mit Aufbereitung von Milchpulver, wobei dem Milchpulver Feuchtigkeit entzogen wird,
   **dadurch gekennzeichnet,**
   **dass** das Milchpulver mit einer Schichtdicke zwischen 0,1 und 10 cm einer Trocknung unterzogen wird bei Temperaturen unter 105 °C für eine Zeitdauer von 10 min bis 100 min.

2. Verfahren gemäß Anspruch 1,
   **dadurch gekennzeichnet,**
   **dass** die Schichtdicke etwa 1-3 cm beträgt und/oder die Temperaturen zwischen 90 °C und 100 °C liegen und/oder die Zeitdauer bei etwa 40 - 60 min liegt.

3. Verfahren gemäß Anspruch 1,
   **dadurch gekennzeichnet,**
   **dass** der Trocknung Luft zugeführt wird bei einer Strömungsgeschwindigkeit zwischen 0,1 und 1 m/s, vorzugsweise von ca. 0,4 m/s.

4. Verfahren gemäß Anspruch 1,
   **dadurch gekennzeichnet,**
   **dass** es in einer ruhenden Trocknung oder in einem Band-, Tunnel-, Streuteller- oder Fließbetttrockner durchgeführt wird.

5. Verfahren gemäß dem Oberbegriff von Anspruch 1,
   **dadurch gekennzeichnet,**
   **dass** das Milchpulver in einem Mengenverhältnis zwischen 10:1 und 1:5 mit Kristallzucker vermischt und getrocknet wird bei Temperaturen von 60 °C bis 150 °C für eine Zeitdauer von 10-100 min.

6. Verfahren gemäß Anspruch 5,
   **dadurch gekennzeichnet,**
   **dass** das Mengenverhältnis zwischen 2:1 und 1:2 ist und/oder die Temperatur zwischen 90 °C und 110 °C beträgt und/oder die Zeitdauer bei etwa 40-60 min liegt.

7. Verfahren gemäß Anspruch 5,
   **dadurch gekennzeichnet,**
   **dass** das Mischen und Trocknen in einem gemeinsamen Vorgang erfolgen.

8. Verfahren gemäß Anspruch 5,
   **dadurch gekennzeichnet,**
   **dass** Milchpulver/Kristallzucker-Gemisch zur Geschmacksentwicklung vor dem Trocknen auf eine Temperatur zwischen 50 °C und 110 °C gebracht und für eine Zeitdauer von 20 - 200 min auf dieser Temperatur gehalten wird.

9. Verfahren gemäß Anspruch 5,
   **dadurch gekennzeichnet,**
   **dass** das Milchpulver/Kristallzucker-Gemisch bei der Trocknung umgewälzt wird, wobei die Umwälzung erfolgt mit einer Froude-Zahl von etwa 0,5 - 3,0.

10. Verfahren gemäß Anspruch 5,
    **dadurch gekennzeichnet,**
    **dass** die Trocknung unter Vakuum erfolgt.

11. Verfahren gemäß Anspruch 5,
    **dadurch gekennzeichnet,**
    **dass** die Trocknung unter Normaldruck erfolgt mit einem Luftaustausch bei einer Luftzufuhrtemperatur von 10 °C - 140 °C, vorzugsweise von 90 °C - 110 °C.

12. Verfahren gemäß einem oder mehreren der Ansprüche 1 - 4 oder 5-11,
    **dadurch gekennzeichnet,**
    **dass** dem Milchpulver oder Milchpulver/Kristallzucker-Gemisch vor dem Trocknen 0,2 - 3, 0 % Fett beigemischt werden, das gewählt wird aus der Gruppe Kakaobutter, wasserfreies Butterreinfett/Milchfett, Pflanzenfett.

13. Verfahren gemäß einem oder mehreren der Ansprüche 1-4,5-11 oder 12,
    **dadurch gekennzeichnet,**
    **dass** in einem weiteren Schritt das getrocknete Milchpulver oder Milchpulver/Kristallzucker-Gemisch mit wenigstens einem Fett gemischt und/oder in diesem dispergiert wird, das gewählt wird aus der Gruppe Kakaobutter, wasserfreies Butterreinfett/ Milchfett, Pflanzenfett.

**14.** Verfahren gemäß Anspruch 13,
**dadurch gekennzeichnet,**
**dass** in einem weiteren Schritt die Mischung/Dispersion granuliert bzw. zu Pellets verarbeitet wird.

**15.** Verfahren gemäß Anspruch 13,
**dadurch gekennzeichnet,**
**dass** die sich ergebende Mischung/Dispersion in einem Mischer verflüssigt und mit einer Rohrleitungsschleife mehrmals durch ihn hindurchgeleitet wird.

Magermilchpulver

```
        ↓
┌──────────────────────────────────────┐        ┌─────────────┐
│              Trocknen                 │────────│ 90 - 100 °C │
│                                       │        │ 40 - 60 min │
│  kontinuierlich oder diskontinuierlich│        │ Ventilation │
│ (z.B. Band-, Tunnel-, Teller-, Etagentrockner)│ └─────────────┘
└──────────────────────────────────────┘
```

Kakaobutter

*alternativ:*
Kakaobutter und
Butterfett

```
              ↓
┌──────────────────────────────────────┐
│              Mischen                  │
│                                       │
│  kontinuierlich oder diskontinuierlich│
│        (z.B. Mischer, Conche)         │
└──────────────────────────────────────┘
        ↓                      ↓
   pumpfähige          ┌──────────────────┐
    Mischung           │   Granulieren,   │
                       │   Pulverisieren  │
                       │                  │
                       │   (z.B. Walze)   │
                       └──────────────────┘
                              ↓
                        rieselfähiges
                          Produkt
```

*Fig. 1*

Magermilchpulver                    Zucker

```
        ↓                              ↓
┌──────────────────────────────────────┐        ┌──────────────────┐
│          Mischen und Trocknen         │────────│   90 - 110 °C    │
│                                       │        │   40 - 60 min    │
│  kontinuierlich oder diskontinuierlich│        │  Frischluftzufuhr│
│     (Schaufel-, Trommeltrockner)      │        └──────────────────┘
└──────────────────────────────────────┘
```

Kakaobutter

*alternativ:*
Kakaobutter und
Butterfett

```
              ↓
┌──────────────────────────────────────┐
│              Mischen                  │
│                                       │
│  kontinuierlich oder diskontinuierlich│
│     (Schaufel-, Trommeltrockner)      │
└──────────────────────────────────────┘
        ↓                      ↓
   pumpfähige          ┌──────────────────┐
    Mischung           │   Granulieren,   │
                       │   Pulverisieren  │
                       │                  │
                       │   (z.B. Walze)   │
                       └──────────────────┘
                              ↓
                        rieselfähiges
                          Produkt
```

*Fig. 2*

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 1245158 A
- DE 4313149
- EP 0879562 A
- EP 1352683 A